# EUROPÄISCHE PATENTSCHRIFT

(11) **EP 0 855 945 B1**
(45) Veröffentlichungstag und Bekanntmachung des Hinweises auf die Patenterteilung: **16.05.2001**
(21) Anmeldenummer: 96945815.7
(22) Anmeldetag: 18.10.1996
(51) Int. Cl.: B23K 11/00

(54) **VERFAHREN ZUM STEUERN EINER SCHWEISSVORRICHTUNG UND SCHWEISSEINRICHTUNG**
WELDING DEVICE CONTROL METHOD AND WELDING DEVICE
PROCEDE DE COMMANDE D'UN DISPOSITIF DE SOUDAGE ET DISPOSITIF DE SOUDAGE CORRESPONDANT

(30) Priorität: 20.10.1995 DE 19539194
(43) Veröffentlichungstag der Anmeldung: 05.08.1998
(73) Patentinhaber: BAVARIA-TECH, WERNER SCHLATTL, D-94034 Passau (DE)
(72) Erfinder: BESSLEIN, Wulf, D-93128 Regenstauf (DE)
(74) Vertreter: Graf, Helmut, Dipl.-Ing.
(86) Internationale Anmeldenummer: DE9601988
(87) Internationale Veröffentlichungsnummer: WO9715415

(56) Entgegenhaltungen:
- FR-A- 2 702 691

## Beschreibung

Die Erfindung bezieht sich auf ein Verfahren zum Steuern einer Schweißvorrichtung gemäß Oberbegriff Patentanspruch 1 sowie auf eine Schweißeinrichtung gemäß Oberbegriff Patentanspruch 11.

Beim elektrischen Punkt- und Widerstandsschweißen ist es vielfach schwierig, einen geforderten Qualitätsmaßstab für die Schweißpunkte einzuhalten.

Es hat sich gezeigt, daß die Qualität und Güte, insbesondere auch Belastbarkeit eines fertiggestellten Schweißpunktes von einer Vielzahl von Faktoren abhängen, so u.a. von der Elektrodenkraft, d.h. von der Kraft, mit der die Elektroden während des Schweißvorganges an das Schweißgut angepreßt anliegen, von der Größe des Schweißstromes, sowie insbesondere aber auch vom Zustand der Elektroden bzw. Polkappen. Letztere unterliegen beim Schweißen einer starken Abnutzung und/oder Veränderung insbesondere ihrer Oberflächen, und zwar beispielsweisein Form einer Abflachung durch Abnutzung, sowie aber auch metallurgisch, und zwar dadurch, daß sich das Material der Elektroden bzw. Polkappen an der Oberfläche verändert, wie dies beispielsweise beim Schweißen von verzinkten Blechen mit Elektroden aus Kupfer der Fall ist. Dies führt dann insbesondere auch zu einer Änderungen der thermischen und elektrischen Eigenschaften der Elektroden bzw. Polkappen, mit denen üblicherweise eine Vielzahl von Schweißpunkten zeitlich nacheinander ausgeführt werden.

Bekannt ist ein Verfahren zum Steuern einer Schweißvorrichtung für das Punkt- oder Widerstandsschweißen (FR 2 702 691). Bei diesem bekannten Verfahren wird nach dem Anpressen der Elektroden gegen das Schweißgut der Schweißstrom u.a. in Abhängigkeit von der Zeit geändert und hierbei auch der das Schweißgut durchströmende Strom gemessen.

Der Erfindung liegt die Aufgabe zugrunde, ein Verfahren sowie eine Schweißeinrichtung aufzuzeigen, mit dem bzw. mit der trotz der unvermeidlichen Änderungen, die mechanisch, metallurgisch usw. an den Elektroden bzw. deren Oberfläche durch die Benutzung auftreten und die nachfolgend allgemein mit "Alterung" bezeichnet werden, einwandfreie Schweißpunkte gewährleistet sind.

Zur Lösung dieser Aufgabe ist ein Verfahren bzw. eine Schweißeinrichtung entsprechend dem Anspruch 1 bzw. Anspruch 11 ausgebildet.

Bei der Erfindung wird der Schweißstrom derart gesteuert, daß zwischen zwei zeitlich aufeinanderfolgenden Arbeitsphasen, in denen jeweils eine vorgegebene Anzahl von Schweißpunkten ausgeführt werden, mindestens eine Prüfphase vorgesehen ist, in der ausgehend von der Stromstärke, die bei der der Prüfphase vorausgehenden Arbeitsphase für den Schweißstrom verwendet wurde, der Schweißstrom stufenförmig erhöht und hierbei jeweils wenigstens ein Schweißpunkt ausgeführt wird, und zwar solange, bis die Spritzergrenze erreicht ist. Anschließend erfolgt dann in der an die Prüfphase anschließenden neuen Arbeitsphase das Ausführen der dortigen Schweißpunkte mit einem Schweißstrom, der gegenüber dem maximalen Schweißstrom der vorausgegangenen Prüfphase um einen Wert abgesenkt ist. Diese Stromabsenkung ist entweder empirisch ermittelt oder wird dadurch ermittelt, daß eine Klebegrenze nicht unterschritten werden darf.

In jeder Arbeitsphase wird der eingestellte Wert des Schweißstromes vorzugsweise konstant gehalten.

Die Regelung erfolgt weiterhin so, daß ein äußerster maximaler Wert für den Schweißstrom vorgegeben ist, der auf keinen Fall überschritten werden kann. Wird in einer Prüfphase auch bei diesem absoluten maximalen Wert für den Schweißstrom die Spritzergrenze nicht erreicht, so ist ein Austauschen der Elektroden erforderlich. Bei dem erfindungsgemäßen Verfahren wird dies vorzugsweise dem Bedienungspersonal auf einem Display angezeigt.

Bei einer typischen Ausführungsform des erfindungsgemäßen Verfahrens erfolgt das stufenförmige Anheben des Schweißstromes in jeder Schweißphase in Stufen von 0,2 kA, wobei dann am Ende jeder Prüfphase das Absenken der Größe des Schweißstromes um etwa 0,4 kA erfolgt. Hierbei wird davon ausgegangen, daß der Abstand zwischen der Spritzergrenze und der Klebergrenze etwa 1 kA beträgt. Die Anzahl von Schweißpunkten, die in jeder Arbeitsphase ausgeführt werden, beträgt beispielsweise 50. Bei dem erfindungsgemäßen Verfahren erfolgt also ein gezieltes Herantasten an die Spritzergrenze und dann bei Erreichen dieser Spritzergrenze, die mit Hilfe eines Sensors detektiert wird, das Absenken des Schweißstromes um einen Wert, der einen Bruchteil des Abstandes zwischen der Spritzergrenze und der Klebergrenze ist. Die Polkappen bzw. Elektroden sind so ausgewählt und der Grundwert für die Elektrodenkraft ist so eingestellt, daß bei neuen Elektroden, also bei Elektroden, die noch nicht abgeflacht sind, Schweißpunkte mit dem geforderten Durchmesser erreicht werden. Durch Alterung ergibt sich eine Abflachung der Elektroden und damit eine Vergrößerung des jeweils möglichen Schweißpunktes, so daß unter Berücksichtigung dieser Erkenntnis und der vorbeschriebenen Regelung des Schweißstromes für die gesamte Lebensdauer der Elektroden optimale Schweißpunkte sichergestellt sind.

Weiterbildungen der Erfindung sind Gegenstand der Unteransprüche.

Die Erfindung wird in Folgenden anhand der Figuren an einem Ausführungsbeispiel näher erläutert. Es zeigen:

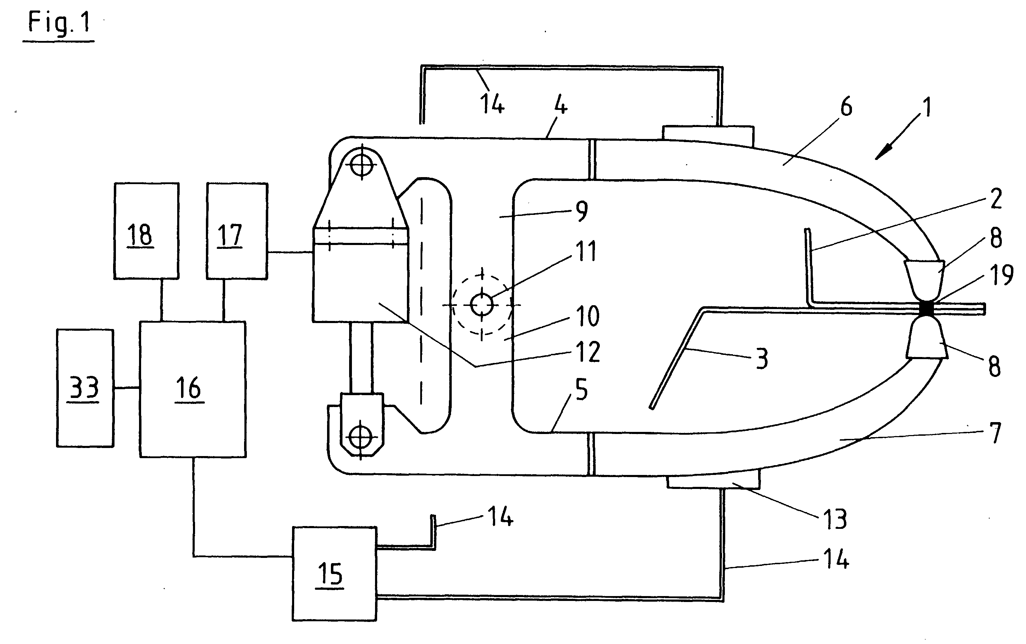

Fig. 1 in vereinfachter schematischer Darstellung ein eine Punktschweißzange aufweisendes Schweißsystem gemäß der Erfindung;
Fig. 2 in einer graphischen Darstellung die Änderung des Schweißstromes bei dem Schweißstrom-Regenverfahren gemäß der Erfindung;
Figuren 3 - 5 in graphischer Darstellung den zeitlichen Verlauf der an der Schweißzange während eines Schweißpunktes gemessenen Elektrodenkraft, bei einem optimalen Schweißpunkt (Fig. 3), bei einem aufgrund eines zu niedrigen Schweißstromes nicht zustandegekommenen Schweißpunktes (Fig. 4) sowie bei einem aufgrund eines zu hohen Schweißstromes und/oder zu geringer Elektrodenkraft aufgetretenden Spritzers (Fig. 5).

In den Figuren ist 1 eine Schweißzange zum Punkt- bzw. Widerstandsschweißen zweier Bleche 2 und 3. Die Schweißzange besteht im wesentlichen aus zwei Pinolenhaltern 4 und 5, an denen jeweils eine Pinole 6 und 7 mit einem Ende befestigt ist, von denen jede an ihrem anderen Ende eine Schweißelektrode bildet bzw. dort mit einer Polkappe 8 versehen ist. Die Pinolenhalter 4 und 5 sind jeweils an einem Arm 9 bzw. 10 vorgesehen, der beispielsweise Bestandteil des Pinolenhalters ist. Die Arme 9 und 10 sind über ein Gelenk 11 gelenkig miteinander verbunden, so daß die Pinolenhalter 4 und 5 und mit diesen auch die Pinolen 6 und 7 bzw. deren Polkappen 8 zum Öffnen und Schließen der Schweißzange 1 auseinander und aufeinander zugeschwenkt werden können.

Zum Öffnen und Schließen der Schweißzange 1 dient die von wenigstens einem Zylinder, beispielsweise von einem Pneumatik-Zylinder gebildete Betätigungseinrichtung 12, die zwischen Verlängerungen der Pinolenhalter 4 und 5 wirkt. An jeder Pinole 6 und 7 ist ein Sensor 13 vorgesehen, der ein Meßsignal liefert, welches bei geschlossener Schweißzange von der elastischen Biegung der betreffenden Pinole 6 und 7 und damit von der Elektroden kraft F abhängig ist, mit der die betreffende Elektrode bzw. Polkappe gegen das Schweißgut (Bleche 2 und 3) durch die Betätigungseinrichtung 12 angepreßt anliegt. Der Sensor 13 ist bevorzugt ein optischer Sensor, der jeweils über eine mehrere Lichtleiter aufweisende Lichtleiteranordnung 14 mit einer opto-elektrischen Einheit verbunden ist, die Bestandteil einer Meßeinrichtung 15 ist, die am Ausgang ein von der Elektrodenkraft abhängiges Steuersignal liefert. Jeder Sensor 13 bildet eine Lichtstrecke, deren Übertragungsfaktor abhängig ist von der Elektrodenkraft, d.h. über die Lichtleiteranordnung 14 wird jeder Lichtstrecke eine vorgegebene Lichtmenge zugeführt, wobei die über die Lichtleiteranorndung 14 rückgeführte Lichtmenge dann eine Funktion der Biegung der betreffenden Pinole 6 bzw. 7 ist. Mit diesen optischen Sensoren 13 lassen sich die Elektrodenkraft und deren Änderungen auch während des eigentlichen Schweißvorganges, d.h. während des Fließens des Schweißstromes sehr genau bestimmen.

Mit 16 ist eine Steuereinrichtung bezeichnet, die u.a. auch aufgrund des von der Meßeinrichtung 15 gelieferten Signals über eine Steuerventileinrichtung 17 die Betätigungseinrichtung 12 sowie vor allem einen Regel 18 steuert, über den u.a. die Zeit und Amplitude des Schweißstromes steuerbar ist.

Es hat sich gezeigt, daß die Qualität, d.h. insbesondere auch Form, Größe und damit Belastbarkeit eines Schweißpunktes 19 von verschiedenen Faktoren, wie Amplitude des Schweißstromes I, Elektrodenkraft F, aber auch von der Abnutzung ode Alterung der Polkappen 8 und damit von der Fläche abhängig ist, mit der diese Polkappen 8 während des Schweißvorganges mit dem Schweißgut bzw. mit dem den Schweißpunkt bildenden Kanal 19 in Berührung stehen, in welchem das Material des Schweißgutes während des Schweißvorganges, d.h. während der Dauer des Schweißstromes verflüssigt ist.

Um für eine möglichst große Anzahl von Schweißpunkten, die am Schweißgut bzw. an den Blechen 2 und 3 zeitlich nacheinander vorgesehen werden, wie dies beispielsweise bei der Fertigung von Fahrzeugkarosserien der Fall ist, eine optimale Qualität, d.h. optimale Größe, Form und damit auch optimale Belastbarkeit zu erreichen, ist zusätzlich zur Überwachung der Elektrodenkraft F auch eine optimale Einstellung des Schweißstromes I notwendig, d.h. dieser Schweißstrom muß so geregelt werden, daß sogenannte "Kleber", bei denen aufgrund eines zu niedrigen Schweißstromes I die Bleche 2 und 3 im wesentlichen nur oberflächig miteinander verbunden sind, ohne daß es zu dem gewünschten Schmelzkanal 19 in den Blechen 2 und 3 und zwischen diesen kommt, ebenso vermieden werden wie sogenannte "Spritzer", bei denen aufgrund eines zu hohen Schweißstromes I und/oder aufgrund einer nicht mehr ausreichenden Elektrodenkraft z.B. bei einer durch Abnutzung zu großen Fläche der Polkappen 8 diese nicht in der Lage sind, dem Druck des durch den Schweißstrom verflüssigten Materials im Kanal 19 standzuhalten und das Material hierdurch in größerer Menge von dem jeweiligen Schweißpunkt wegspritzt. Angestrebt ist eine Amplitude für den Schweißstrom I der Art, daß bei eingeschaltetem Schweißstrom der Kanal 19 des flüssigem Materials zwischen den Polkappen 8 sich ausbildet, das verflüssigte Material in dem durch die Polkappen 8 abgeschlossenen Kanal im wesentlichen verbleibt, hierbei sich zwar während des Schweißstromes durch thermische Volumenvergrößerung des Materials des Schweißgutes im Kanal 19 eine gewisse Erhöhung der Elektrodenkraft ergibt, nach dem Abschalten des Schweißstromes und bei weiterhin gegen das Schweißgut angepreßten Polkappen 8 aber durch Abkühlung des Materials ein typischer sanfter Abfall der Elektrodenkraft eintritt.

Die Polkappen 8 bzw. der Größe sind so gewählt, daß mit diesen Polkappen auch im neuen Zustand auf jeden Fall bei optimalen Schweißstrom ein Schweißpunkt der gewünschten Größe bzw. des gewünschten Durchmessers erreicht wird.

Tritt bei längerer Verwendung der Polkappen 8 eine Vergrößerung der wirksamen Fläche dieser Polkappen ein, so lassen sich durch Erhöhung des Schweißstromes I weiterhin optimale Schweißpunkte erzielen, wobei diese dann einen etwas größeren Querschnitt aufweisen, was aber ohne Bedeutung ist, da diese Schweißpunkte auf jeden Fall die Anforderungen an die Mindestfestigkeit erfüllen.

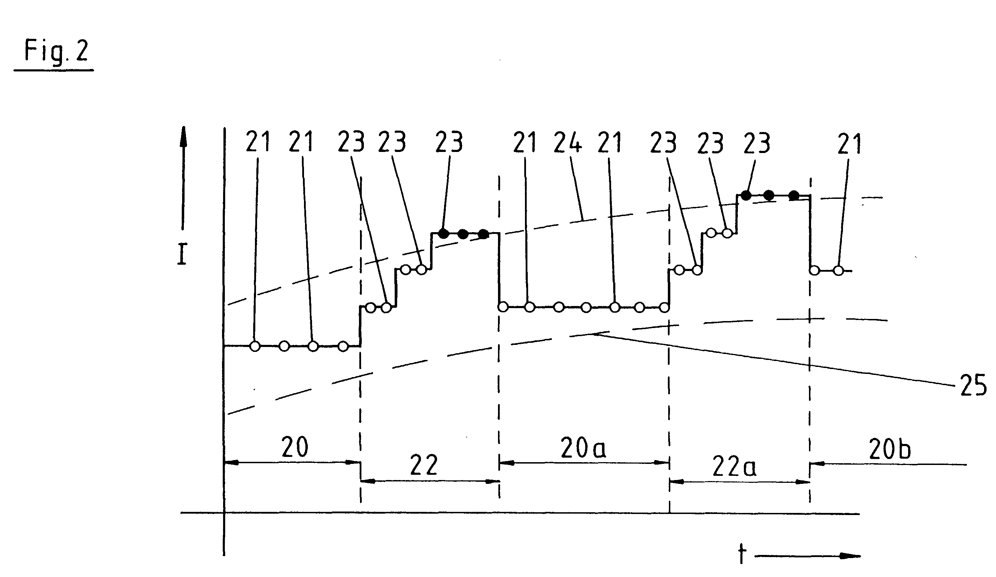

In den Figuren 2 ist die Regelung des Schweißstromes I mittels des Reglers 18 wiedergegeben. Mit 20 ist eine Arbeitsphase bezeichnet, in der eine Serie von Schweißpunkten 21 mit einem Schweißstrom I mit jeweils gleich großer Stromstärke ausgeführt werden. Nach jeder Arbeitsphase 20 veranlaßt die Steuereinrichtung 16 selbsttätig eine Prüf- und Regelphase 22, in der die Stromstärke des Schweißstromes I in mehreren Stufen, beispielsweise in Stufen von 0,6 kA erhöht wird und auf jeder Stufe wenigstens ein Schweißpunkt 23, vorzugsweise mehrere derartige Schweißpunkte ausgeführt werden. Die Erhöhung des Schweißstromes in vorgegebenen Stufen während der Prüfphase 22 erfolgt jeweils bis zu einer Stromstärke, die unter Berücksichtigung des Zustandes der Polkappen 8 dann zu dem vorgenannten Spritzer beim Schweißen führt. Ist dieser Zustand erreicht und von der Steuereinrichtung 16 registriert, so beendet diese selbsttätig die Prüfphase 22 und veranlaßt eine Absenkung der Stromstärke des Schweißstromes I um einen vorgegebenen, festen Betrag ΔI, d.h. mit der dann eingestellten Stromstärke I wird in einer neuen Arbeitsphase 20a eine Serie von Schweißpunkten 21 hergestellt. Die Stromstärke in der Arbeitsphase 20a ist um den Betrag ΔI niediger als die maximale Stromstärke während der Prüfphase 22, aber höher als die Stromstärke in der vorausgegangenen Arbeitsphase 20. Aufgrund empirischer Ermittlungen ist die Stromabsenkung ΔI so gewählt, daß die Stromstärke während jeder Arbeitsphase 20, 20a sowie auch in der nach einer weiteren Prüfphase 22a anschließenden Arbeitsphase 20b unter Berücksichtigung des Zustandes der Polkappen 8 über der sogenannten Kleber-Grenze liegt.

In der Figur 2 ist mit der unterbrochenen Linie 24 die Spritzergrenze und mit der unterbrochenen Linie 25 die Klebergrenze angegeben. Beide Linien 24 und 25 steigen mit der Abnutzung bzw. Abflachung der Polkappen 8 an.

Die Steuereinrichtung 16, die bevorzugt eine rechnergestütze Steuereinrichtung ist, übewacht nicht nur aufgrund des Signalverlaufs der von den Sensoren 13 gelieferten Meßsignale das ordnungsgemäße Schließen der Schweißzange 1, das Vorliegen der erforderlichen Elektroden kraft F, sondern bestimmt aus diesem Signalverlauf auch, ob während der Prüfphase 22, 22a usw. die Spritzergrenze 24 erreicht ist. Weiterhin ist die Steuereinrichtung 16 auch in der Lage, aus dem Signalverlauf das Vorliegen eines ordnungsgemäßen Schweißpunktes sowie das Unterschreiten der Klebergrenze 25 festzustellen, und zwar durch Berücksichtigung bzw. Auswertung der für diese Zustände jeweils typischen, sich unterscheidenden Signalkurven. Diese Auswertung erfolgt beispielsweise durch Vergleich der gelieferten Signalkurven mit Ideal- oder Sollkurven oder durch Erfassung von für den jeweiligen Zustand (optimaler Schweißpunkt, Überschreitung der Spritzergrenze, Unterschreitung der Klebergrenze) typischer Änderungen im Signalverlauf.

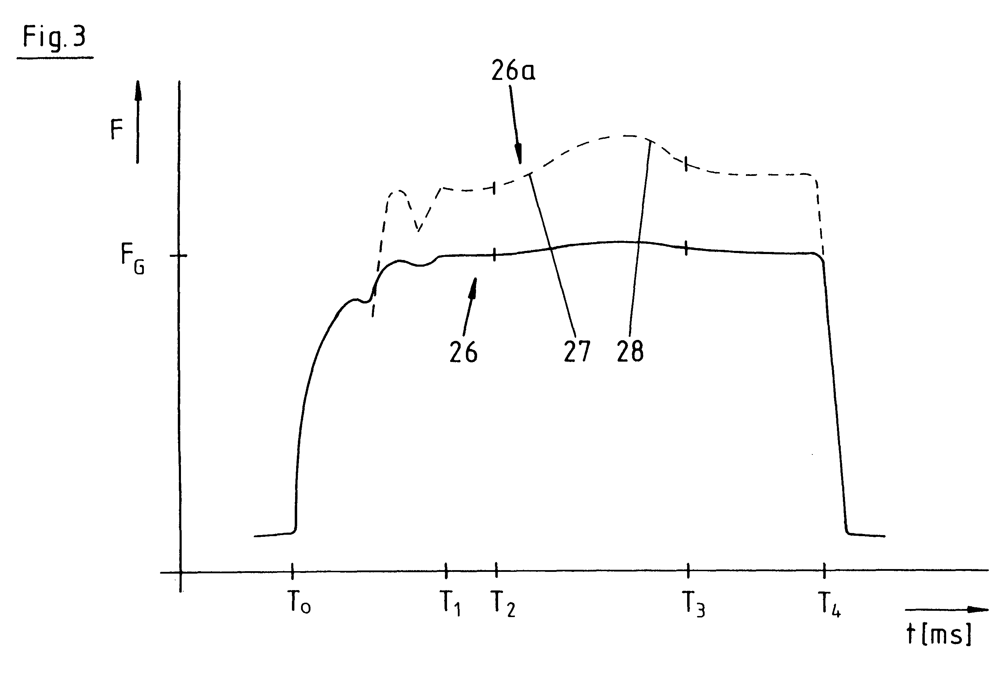

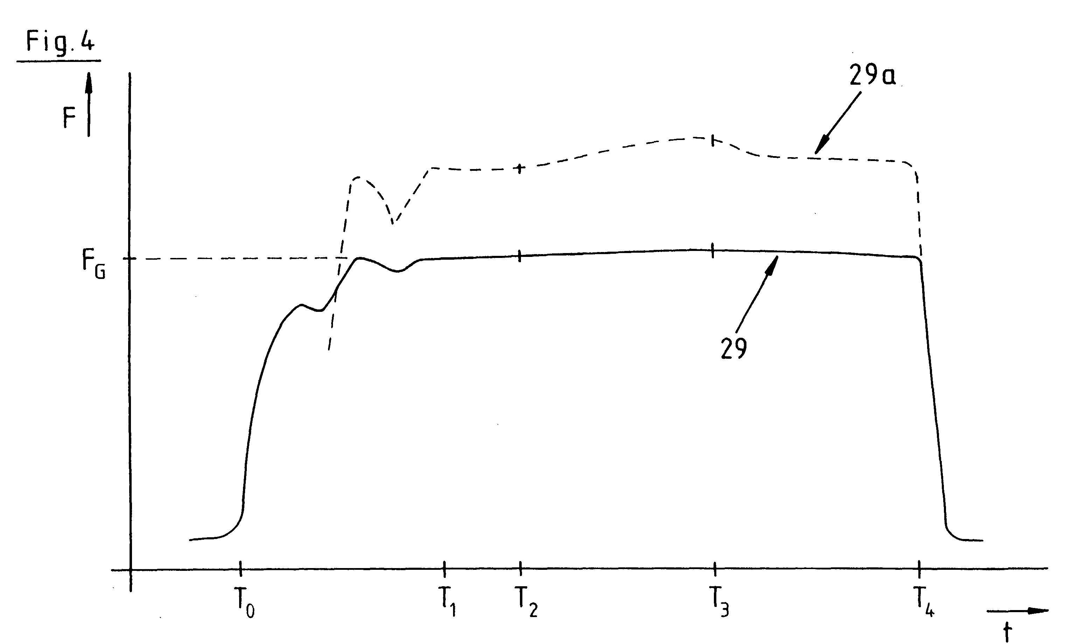

Wie die Figuren 3 - 5 zeigen, ergeben sich für einen optimalen Schweißpunkt (Figur 3) für einen Kleber (Figur 4) und für einen Spritzer (5) unterschiedliche und jeweils sehr typische Signalkurven. In diesen Figuren ist jeweils die Elektrodenkraft F in Abhängigkeit von der Zeit aufgetragen. Zum Zeitpunkt T0 erfolgt das Schließen der Schweißzange 1 durch Aktivieren der Betätigungseinrichtung 12. Die Schweißkraft F steigt dann an, bis am Zeitpunkt T1 der vorgegebene bzw. gewünschte Grundwert FG der Elektrodenkraft erreicht ist, und zwar durch entsprechende Steuerung über die Steuereinrichtung 16 und die Steuerventileinrichtung 17. Die Schwankungen der Elektrodenkraft F im Zeitraum
T0 - T1 resultieren u.a. aus Prellvorgängen beim Schließen der Schweißzange. Gegenüber dem Zeitpunkt T1 etwas zeitig verzögert erfolgt zum Zeitpunkt T2 gesteuert durch die Steuereinrichtung 16 das Einschalten des Schweißstromes, der nach einer vorgegebenen oder von der Steuereinrichtung 16 gesteuerten Zeitperiode zum Zeitpunkt T3 abgeschaltet wird. Anschließend erfolgt zum Zeitpunkt T4 das Öffnen der Schweißzange 1 durch die Aktivieren der Betätigungseinrichtung 12, so daß ab dem Zeitpunkt T4 die Elektrodenkraft F schnell abnimmt.

In der Figur 3 ist mit der Kurve 26 und insbesondere auch mit der um den Faktor 4 vergrößerten Kurve 26a der typische Verlauf des Schweißstromes I bei einem optimalen Schweißpunkt dargestellt, d.h. während des eingeschalteten Schweißstromes im Zeitintervall zwischen T2 und T3 steigt die Elektroden kraft F zunächst an und fällt dann noch vor dem Abschalten des Schweißstromes, d.h. kurz vor Erreichen des Schweißstromendes bzw. vor dem Zeitpunkt T3 bei 28 kontinuierlich ab, d.h. der Verlauf des Schweißstromes I besitzt im diesem Fall bei eingeschaltetem Schweißstrom einen im wesentlichen kontinuierlich ansteigenden und kontinuierlich, relativ flach abfallenden Verlauf. Der Anstieg 27 ist dabei durch die thermische Ausdehnung des Materials und der kontinuierliche Abfall 28 dadurch bedingt sind, daß die Hohlkappen 8 in das verflüssigte Material etwas einsinken. Diese von dem Anstieg 27 und dem kontinuierlichen Abfall 28 gekennzeichnete Überhöhung der Elektrodenkraft F ist für einen guten Schweißpunkt typisch.

Die Steuereinrichtung 16 kann daher durch Vergleich der tatsächlich gemessenen Elektrodenkraft F mit einer Idealkurve daraus schließen, daß ein idealer Schweißpunkt zustandegekommen ist. Bevorzugt erfolgt die Auswertung des Meßsignals der Sensoren 13 dadurch, daß überprüft wird, ob dieses Signal beispielsweise in ein für einen guten Schweißpunkt vorgegebenes Fenster paßt, welches auch noch zulässige Toleranzen berücksichtigt.

Weiterhin kann von der Steuereinrichtung 16 auch das Flächenintegral unter dem Anstieg 27 und dem Abfall 28 berücksichtigt werden und mit einem vorgegebenen Sollwert verglichen werden. Auch die Erfassung des Abfalls 28 am Ende des Schweißstromes kann als typisches Kriterium für einen guten Schweißpunkt erfaßt werden.

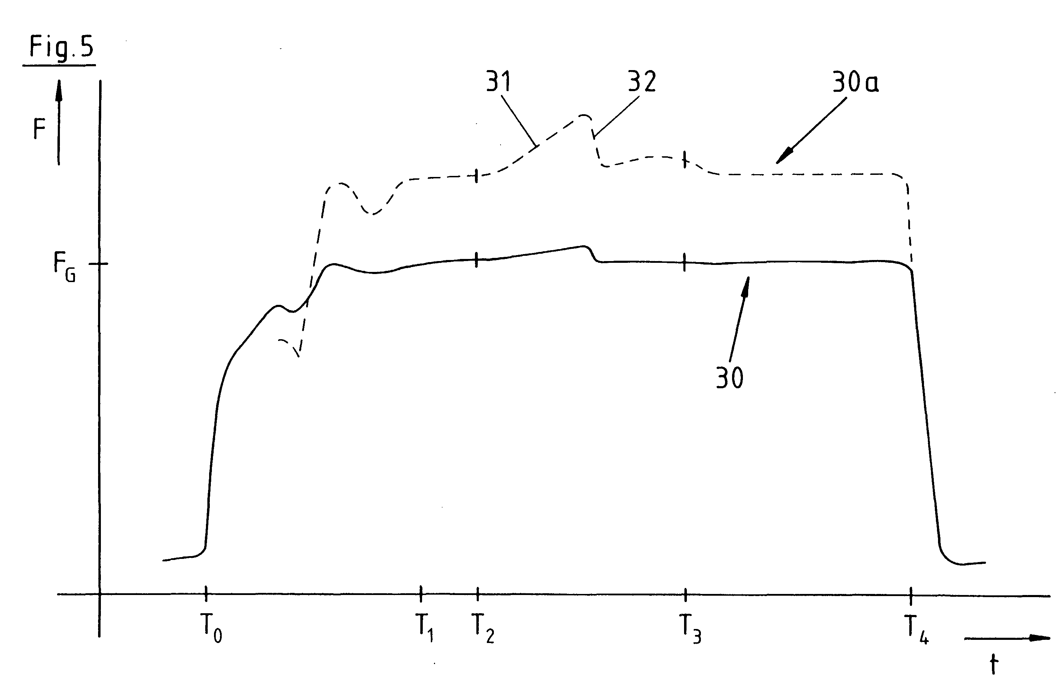

Die Kurve 29 und die wiederum vierfach vergrößerte Kurve 29a der Figur 4 zeigt, daß zwar auch bei einem Kleber bei eingeschaltetem Schweißstrom (Zeitintervall T2/T3) durch thermische Erwärmung des Materials des Schweißgutes ein geringer Anstieg der Elektrodenkraft erfolgt, der typische kontinuierliche Abfall am Ende des Schweißstromes aber fehlt. Mit der Figur 5 ist mit der Kurve 30 und mit der wiederum vierfach vergrößerten Kurve 30a der typische Verlauf der Elektrodenkraft F bei einem Spritzer wiedergegeben. Während der Dauer des Schweißstromes (Zeitintervall T2 - T3) ergibt sich ein starker Anstieg 31 und weit vor dem Ende des Schweißstromes ein abrupter Abfall 32 etwa auf dem Wert FG. Aus diesem starken Anstieg 31, insbesondere aber aus dem abrupten Abfall 32, dessen Steigungswinkel sehr viel größer ist als der Steigungswinkel des Abfalles 28, ist eindeutig das Vorliegen eines Spritzers feststellbar.

Die Erfindung wurde voranstehend an einem Ausführungsbeispiel beschrieben. Es versteht sich, daß zahlreiche Änderungen sowie Abwandlungen möglich sind, ohne daß dadurch der der Erfindung zugrundeliegende Erfindungsgedanke verlassen wird.

So ist es beispielsweise möglich, daß die Steuereinrichtung 16 am Ende jeder Prüfphase 22, 22a usw. nach erfolgter Stromabsenkung aufgrund des Verlaufes der Elektrodenkraft überprüft, ob nicht evtl. wegen des zu niedrigen Schweißstromes I bei dem ersten Schweißpunkt der folgenden Arbeitsphase ein Kleber vorliegt, und in einem solchen Fall den Schweißstrom I um einen vorgegebenen Wert erhöht. Selbstverständlich ist es auch möglich, daß wir an jeder Arbeitsphase ständig das eventuelle Vorliegen eines Klebers überwacht und im Falle eines Klebers der Schweißstrom I erhöht wird.

Die Steuereinrichtung 16 bzw. das diese Steuereinrichtung steuernde Programm können weiterhin so ausgeführt sein, daß eine dynamische Steuerung der Schweißstromdauer, d.h. des zeitlichen Abstandes zwischen T2 und T3 in einem bestimmten vorgegebenen Rahmen erfolgt, und zwar so, daß das Integral des Anstieges der Elektrodenkraft nach dem Einschalten des Schweißstromes auf jeden Fall einen vorgegebenen Mindestwert erreicht, wobei das Abschalten des Schweißstromes aber auf jeden Fall dann erfolgt, wenn die Zeitdauer T2 - T3 einen vorgegebenen Maximalwert erreicht hat.

In jeder Arbeitsphase 20, 20a, 20b wird jeweils eine Vielzahl von Schweißpunkten 21 an ein und demselben Schweißgut räumlich gegeneinander versetzt ausgeführt. Selbstverständlich besteht auch die Möglichkeit, daß das Schweißgut während der jeweiligen Arbeitsphase gewechselt wird und/oder daß in zwei aufeinanderfolgenden Arbeitsphasen Schweißpunkte 21 an ein und demselben Schweißgut räumlich versetzt ausgeführt wird.

Ein Auswechseln der Polkappen 8 ist dann erforderlich, wenn in einer Prüfphase auch nach Erhöhung des Schweißstromes auf einen maximal möglichen Grenzwert ein Spritzer nicht erreicht wird. In diesem Fall erfolgt dann an einem Anzeigedisplay 33 ein Hinweis, daß das Austauschen der Polkappen notwendig ist.

### Bezugszeichenliste

- 1: Schweißzange
- 2, 3: Blech
- 4, 5: Pinolenhalter
- 6, 7: Pinole
- 8: Polkappe
- 9, 10: Arm
- 11: Gelenk
- 12: Betätigungseinrichtung
- 13: Sensor
- 14: Lichtleiteranordnung
- 15: Meßeinrichtung
- 16: Steuereinrichtung
- 17: Steuerventileinrichtung
- 18: Stromregler
- 19: Schweißkanal
- 20, 20a, 20b: Arbeitsphase
- 21: Schweißpunkt
- 22, 22a: Prüfphase
- 23: Schweißpunkt
- 24: Spritzergrenze
- 25: Klebergrenze
- 26, 26a: Schweißstromverlauf
- 27: Anstieg
- 28: Abfall
- 29, 29a: Schweißstromverlauf
- 30, 30a: Schweißstromverlauf
- 31: Anstieg
- 32: Abfall
- 33: Anzeigedisplay

## Patentansprüche

1. Verfahren zum Steuern einer Schweißeinrichtung zum elektrischen Punkt- oder Widerstandsschweißen von Schweißgut (2, 3), mit wenigstens zwei Schweißelektroden (8), die für den Schweißvorgang durch eine Betätigungseinrichtung (12) mit einer vorgegebenen Elektrodenkraft (FG) an das Schweißgut (2, 3) angepreßt sind, mit einer Steuereinrichtung (16), die über einen Regler (18) den Schweißstrom steuert, **dadurch gekennzeichnet,** daß die Steuereinrichtung (16) den Schweißstrom (I) unter Berücksichtigung des Signals wenigstens eines Sensors (13) derart steuert, daß bei einer Vielzahl von Schweißpunkten (21), die jeweils in wenigstens zwei zeitlich aufeinanderfolgenden Arbeitsphasen (20, 20a, 20b) erzeugt werden, der Schweißstrom (I) in wenigstens einer zwischen den zeitlich aufeinanderfolgenden Arbeitsphasen liegenden Prüfphase (22, 22a) in Stufen erhöht und hierbei jeweils wenigstens ein Schweißpunkt (23) ausgeführt wird, und zwar solange, bis die Spritzergrenze (24) erreicht ist, und daß nach der Prüfphase für eine neue Arbeitsphase eine Absenkung des Schweißstromes auf einen Wert erfolgt, der kleiner ist als der maximale Schweißstrom in der Prüfphase, jedoch größer ist als der Schweißstrom in der vorausgegangenen Arbeitsphase (20, 20a).

2. Verfahren nach Anspruch 1, dadurch gekennzeichnet, daß sämtliche Schweißpunkte (21) in der an die Prüfphase anschließenden neuen Arbeitsphase mit dem am Ende der Prüfphase für den Schweißstrom (I) eingestellten Wertdurchgeführt werden.

3. Verfahren nach Anspruch 1 oder 2, dadurch gekennzeichnet, daß der Wert des Schweißstromes am Ende jeder Prüfphase (22, 22a) um einen vorgegebenen, empirisch ermittelten Wert abgesenkt wird.

4. Verfahren nacheinem der Ansprüche 1 - 3, gekennzeichnet durch die Verwendung wenigstens einen Sensors (13), der ein das Erreichen und/oder Überschreiten der Spritzgrenze (24) dokumentierendes Signal an die Steuereinrichtung (16) liefert und/oder die Elektrodenkraft und deren Verlauf (26, 26a, 29, 29a, 30, 30a) während des Schweißens erfaßt.

5. Verfahren nach einem der Ansprüche 1 - 4, dadurch gekennzeichnet, die Steuereinrichtung (16) aus dem für einen Spritzer typischen Kurvenverlauf (30, 30a) das Auftreten eines Spritzers beim Schweißen und/oder das Erreichen bzw. Überschreiten der Spritzergrenze (24) ermittelt.

6. Verfahren nach einem der vorhergehenden Ansprüche, dadurch gekennzeichnet, daß die Steuereinrichtung aus dem für einen guten Schweißpunkt typischen Kurvenverlauf (26, 26a) der Elektrodenkraft das Vorliegen bzw. das Nichtvorliegen eines guten Schweißpunktes ermittelt.

7. Verfahren nach einem der vorhergehenden Ansprüche, dadurch gekennzeichnet, daß die Steuereinrichtung aus dem Kurvenverlauf der Elektrodenkraft das Erreichen und/oder Unterschreiten der Klebergrenze (25) ermittelt.

8. Verfahren nach einem der vorhergehenden Ansprüche, dadurch gekennzeichnet, daß die Steuereinrichtung (16) den vom Sensor (13) ermittelten Verlauf der Elektrodenkraft mit vorgegebenen bzw. gespeicherten Kurven oder Kurvenscharen vergleicht, die für einen guten Schweißpunkt und/oder einen Spritzer und/oder einem Klebe typisch sind.

9. Verfahren nach einem der vorhergehenden Ansprüche, dadurch gekennzeichnet, daß in jeder Arbeitsphase eine Vielzahl von Schweißpunkten an ein und demselben Schweißgut räumlich gegeneinander versetzt vorgesehen werden.

10. Verfahren nach einem der vorhergehenden Ansprüche, dadurch gekennzeichnet, daß in jeder Prüfphase die Erhöhung der Stromstärke in Schritten von 0,2 kA erfolgt.

11. Schweißeinrichtung zum elektrischen Punkt- oder Widerstandsschweißen von Schweißgut (2, 3), mit wenigstens zwei Schweißelektroden (8), die für den Schweißvorgang durch eine Betätigungseinrichtung (12) mit einer vorgegebenen Elektrodenkraft (FG) an das Schweißgut (2, 3) angepreßt sind, mit einer Steuereinrichtung (16), die über einen Regler (18) den Schweißstrom steuert, **dadurch gekennzeichnet**, daß die den Schweißstrom (I) unter Berücksichtigung des Signals wenigstens eines Sensors (13) steuernde Steuereinrichtung (16) Mittel aufweist, die einer Vielzahl von Schweißpunkten (21), die jeweils in wenigstens zwei zeitlich aufeinanderfolgenden Arbeitsphasen (20, 20a, 20b) erzeugt werden, den Schweißstrom (I) in wenigstens einer zwischen den zeitlich aufeinanderfolgenden Arbeitsphasen liegenden Prüfphase (22, 22a) in Stufen erhöhen und veranlassen, daß hierbei jeweils wenigstens ein Schweißpunkt (23) ausgeführt wird, und zwar solange, bis die Spritzergrenze (24) erreicht ist, und daß die Mittel nach der Prüfphase für eine neue Arbeitsphase eine Absenkung des Schweißstromes auf einen Wert bewirken, der kleiner ist als der maximale Schweißstrom in der Prüfphase, jedoch größer ist als der Schweißstrom in der vorausgegangenen Arbeitsphase (20, 20a).

12. Schweißeinrichtung nach Anspruch 11, dadurch gekennzeichnet, daß sämtliche Schweißpunkte (21) in der an die Prüfphase anschließenden neuen Arbeitsphase mit dem am Ende der Prüfphase für den Schweißstrom (I) eingestellten Wertdurchgeführt werden.

13. Schweißeinrichtung nach Anspruch 11 oder 12, dadurch gekennzeichnet, daß der Wert des Schweißstromes am Ende jeder Prüfphase (22, 22a) um einen vorgegebenen, empirisch ermittelten Wert abgesenkt wird.

14. Schweißeinrichtung nacheinem der Ansprüche 11 - 13, gekennzeichnet durch die Verwendung wenigstens einen Sensors (13), der ein das Erreichen und/oder Überschreiten der Spritzgrenze (24) dokumentierendes Signal an die Steuereinrichtung (16) liefert und/oder die Elektrodenkraft und deren Verlauf (26, 26a, 29, 29a, 30, 30a) während des Schweißens erfaßt.

15. Schweißeinrichtung nach einem der Ansprüche 11 - 14, dadurch gekennzeichnet, die Steuereinrichtung (16) aus dem für einen Spritzer typischen Kurvenverlauf (30, 30a) das Auftreten eines Spritzers beim Schweißen und/oder das Erreichen bzw. Überschreiten der Spritzergrenze (24) ermittelt.

16. Schweißeinrichtung nach einem der vorhergehenden Ansprüche, dadurch gekennzeichnet, daß die Steuereinrichtung aus dem für einen guten Schweißpunkt typischen Kurvenverlauf (26, 26a) der Elektrodenkraft das Vorliegen bzw. das Nichtvorliegen eines guten Schweißpunktes ermittelt.

17. Schweißeinrichtung nach einem der vorhergehenden Ansprüche, dadurch gekennzeichnet, daß die Steuereinrichtung aus dem Kurvenverlauf der Elektrodenkraft das Erreichen und/oder Unterschreiten der Klebergrenze (25) ermittelt.

18. Schweißeinrichtung nach einem der vorhergehenden Ansprüche, dadurch gekennzeichnet, daß die Steuereinrichtung (16) den vom Sensor (13) ermittelten Verlauf der Elektrodenkraft mit vorgegebenen bzw. gespeicherten Kurven oder Kurvenscharen vergleicht, die für einen guten Schweißpunkt und/oder einen Spritzer und/oder einem Klebe typisch sind.

19. Schweißeinrichtung nach einem der vorhergehenden Ansprüche, dadurch gekennzeichnet, daß in jeder Arbeitsphase eine Vielzahl von Schweißpunkten an ein und demselben Schweißgut räumlich gegeneinander versetzt vorgesehen werden.

20. Schweißeinrichtung nach einem der vorhergehenden Ansprüche, dadurch gekennzeichnet, daß in jeder Prüfphase die Erhöhung der Stromstärke in Schritten von 0,2 kA erfolgt.

## Claims

1. Process for controlling a welding device for the electrical spot welding or resistance welding of material (2, 3), with at least two welding electrodes (8), which are pressed against the material (2, 3) for the welding procedure by means of an activating device (12) with a pre-set electrode force (FG), with a control device (16), which controls the welding current through a regulator (18), distinguished by the fact that the control device (16) controls the welding current (1), taking the signal from at least one sensor (13) into account, in such a way that, at a large number of weld points (21), which are in each case generated in at least two consecutive working phases (20, 20a, 20b), the welding current (1) is increased in stages in at least one test phase positioned between the consecutive working phases (22, 22a), and during this at least one weld point (23) is executed, and this until the spatter boundary (24) is reached, and that after the test phase a reduction in the welding current takes place, for a new working phase, to a value which is lower than the maximum welding current in the test phase, but higher than the welding current in the preceeding working phase (20, 20a).

2. Process as Claim 1, distinguished by the fact that all the weld points (21) in the new working phase following the test phase are executed using the value set at the end of the test phase for the welding current (1).

3. Process as Claim 1 or 2, distinguished by the fact that the value of the welding current is reduced by a pre-set, empirically determined value at the end of each test phase (22, 22a).

4. Process as one of Claims 1-3, distinguished by the use of at least one sensor (13), which supplies a signal documenting the reaching and/or overshooting of the spatter boundary (24) to the control device (16) and/or determines the electrode force and its curve (26, 26a, 29, 29a, 30, 30a) during welding.

5. Process as one of Claims 1-4, distinguished by the fact that the control device (16) detects any spatter occurring during welding, from the typical curve for spatter (30, 30a), and detects the reaching and/or overshooting of the spatter boundary (24).

6. Process as one of the preceding claims, distinguished by the fact that the control device determines the presence or absence of a good weld point from the typical curve of the electrode for a good weld point (26, 26a).

7. Process as one of the preceding claims, distinguished by the fact that the control device detects the reaching or undershooting of the adhesive boundary (25) from the curve of the electrode force.

8. Process as one of the preceding claims, distinguished by the fact that the control device (16) compares the electrode force curve determined by the sensor (13) with pre-set and/or stored curves or groups of curves which are typical for a good weld point and/or spatter and/or adhesion.

9. Process as one of the preceding claims, distinguished by the fact that in each working phase a number of weld points are provided for on one and the same material, three-dimensionally offset.

10. Process as one of preceding claims, distinguished by the fact that in every test phase the current strength is increased in steps of 0.2 kA.

11. Welding device for the electrical spot welding or resistance welding of material (2, 3), with at least two welding electrodes (8), which are pressed against the material (2, 3) for the welding process through an activating device (12) with a pre-set electrode force (FG) with a control device (16), which controls the welding current through a regulator (18), distinguished by the fact that the control device (16) controlling the welding current (1), taking into account the signal from at least one sensor (13), has means which increase the welding current (1) of a number of weld points (21), which are each generated in at least two successive working phases (20, 20a, 20b), in stages in at least one test phase (22, 22a) between the successive working phases, and bring it about that hereby at least one weld point (23) is executed in each case, and this until the spatter boundary (24) is reached, and that, after a test phase, for a new working phase the means effect a reduction of the welding current to a value which is lower than the maximum welding current in the test phase, but higher than the welding current in the preceding working phase (20, 20a).

12. Welding device as Claim 11, distinguished by the fact that all weld points (21) in the working phase following the test phase are executed with the value for the welding current (1) set at the end of the test phase.

13. Welding device as Claim 11 or 12, distinguished by the fact that the value of the welding current is reduced at the end of each test phase (22, 22a) by a pre-set, empirically determined value.

14. Welding device as Claims 11-13, distinguished by the use of at least one sensor (13) which supplies a signal documenting the reaching and/or overshooting of the spatter boundary (24) to the control device (16) and/or determines the electrode force and its curve (26, 26a, 29, 29a, 30, 30a) during welding.

15. Welding device as one of Claims 11-14, distinguished by the fact that the control device (16) detects any spatter occurring during welding and/or the reaching and/or overshooting of the spatter boundary (24) from the typical curve (30, 30a) for spatter.

16. Welding device as one of the preceding claims, distinguished by the fact that the control device determines the existence or non-existence of a good weld point from the typical curve (26, 26a) of the electrode force for a good weld point.

17. Welding device as one of the preceding claims, distinguished by the fact that the control device detects the reaching or undershooting of the adhesion boundary (25) from the curve of the electrode force.

18. Welding device as one of the preceding claims, distinguished by the fact that the control device (16) compares the curve of the electrode force detected by the sensor (13) with pre-set and/or stored curves or groups of curves which are typical for a good weld point and/or spatter and/or adhesion.

19. Welding device as one of the preceding claims, distinguished by the fact that in every working phase a number of weld points are provided for on one and the same material, three-dimensionally displaced.

20. Welding device as one of the preceding claims, distinguished by the fact that in every test phase the current strength is increased in steps of 0.2 kA.

## Revendications

1. Procédé de commande d'un dispositif de soudage destiné au soudage électrique par points ou par résistance d'un métal à souder (2, 3), avec au moins deux électrodes de soudage (8) serrées avec une puissance à l'électrode prédéfinie (FG) contre le métal à souder (2, 3), pour permettre le soudage avec un dispositif de manipulation (12), avec un dispositif de commande (16) commandant le courant de soudage par l'intermédiaire d'un régulateur (18), **caractérisé en ce que** le dispositif de commande (16) commande le courant de soudage (I) en tenant compte du signal d'au moins un capteur (13) de telle sorte que, si les points de soudage (21) sont nombreux et générés dans au moins deux phases de travail consécutives (20, 20a, 20b), le courant de soudage (I) augmente graduellement dans au moins une phase de contrôle (22, 22a) située entre les phases de travail consécutives, de telle sorte qu'au moins un point de soudage (23) soit exécuté jusqu'à ce que le seuil de projection (24) soit atteint, et de telle sorce que, après la phase de contrôle pour une nouvelle phase de travail, le courant de soudage diminue à une intensité inférieure au courant de soudage maximal dans la phase de contrôle, mais supérieure au courant de soudage dans la phase de travail précédente (20, 20a).

2. Procédé selon la revendication 1, caractérise en ce que tous les points de soudage (21) sont exécutés dans la nouvelle phase de travail consécutive à la phase de contrôle, avec réglage de l'intensité du courant de soudage (I) à la fin de la phase de contrôle.

3. Procédé selon la revendication 1 ou 2, caractérisé en ce que l'intensité du courant de soudage à la fin de chaque phase de contrôle (22, 22a) est réduite à une valeur prédéfinie de façon empirique.

4. Procédé selon l'une ou l'autre des revendications 1-3, caractérisé par l'utilisation d'au moins un capteur (13) transmettant au dispositif de commande (16) un signal précisant si le seuil de projection (24) est atteint et/ou dépassé et enregistrant la puissance à l'électrode ainsi que ses variations (26, 26a, 29, 29a, 30, 30a) pendant le soudage.

5. Procédé selon l'une des revendications 1-4, caractérisé en ce que le dispositif de commande (16), sur la base d'une courbe (30, 30a) typique pour une projection, détermine si une projection est provoquée lors du soudage et/ou si le seuil de projection (24) est atteint voire dépassé.

6. Procédé selon l'une ou l'autre des revendications précédentes, caractérisé en ce que le dispositif de commande, à partir d'une courbe (26, 26a) de la puissance à l'électrode typique pour un bon point de soudage, précise si le point de soudage est bon ou non.

7. Procédé selon l'une des revendications précédentes, caractérisé en ce que le dispositif de commande précise si le seuil de collage (25) est atteint et/ou dépassé, en fonction de la courbe de la puissance à l'électrode.

8. Procédé selon l'une des revendications précédentes, caractérisé en ce que le dispositif de commande (16) compare les variations de la puissance à l'électrode communiquées par le capteur (13) avec des courbes ou faisceaux de courbes prédéfinis ou mémorisés, typiques pour un bon point de soudage et/ou une projection et/ou un collage.

9. Procédé selon l'une des revendications précédentes, caractérisé en ce qu'un grand nombre de points de soudage distancés l'un par rapport à l'autre sur toute la surface d'un même métal à souder est prévu pour chaque phase de travail.

10. Procédé selon une des revendications précédentes, caractérisé en ce que dans chaque phase de contrôle, l'ampérage est augmenté graduellement de 0,2 kA.

11. Dispositif de soudage pour le soudage par points ou par résistance d'un métal à souder (2, 3), équipé d'au moins deux électrodes de soudage (8) serrées avec une puissance à l'électrode prédéfinie (FG) contre le métal à souder (2, 3), pour permettre le soudage avec un dispositif de manipulation (12), d'un dispositif de commande (16) commandant le courant de soudage par l'intermédiaire d'un régulateur (18), et caractérisé en ce que le dispositif de commande (16) qui commande le courant de soudage (I) en tenant compte du signal d'au moins un capteur permet de générer une multitude de points de soudage (21) dans au moins deux phases de travail consécutives (20, 20a, 20b), d'augmenter graduellement 1'intensité du courant de soudage (I) dans au moins une phase de contrôle (22, 22a) située entre les phases de travail consécutives, d'exécuter au moins un point de soudage (23) jusqu'à ce que le seuil de projection (24) soit atteint et de réduire l'intensité du courant après la phase de contrôle pour une nouvelle phase de travail à une intensité inférieure au courant de soudage maximal dans la phase de contrôle, mais supérieure au courant de soudage dans la phase de travail précédente (20, 20a).

12. Dispositif de soudage selon la revendication 11, caractérisé en ce que tous les points de soudage (21) sont exécutés dans la nouvelle phase de travail consécutive à la phase de contrôle, avec réglage de l'intensité du courant de soudage (I) à la fin de la phase de contrôle.

13. Dispositif de soudage selon la revendication 11 ou 12, caractérisé en ce que l'intensité du courant de soudage à la fin de chaque phase de contrôle (22, 22a) est réduite à une valeur prédéfinie de façon empirique.

14. Dispositif de soudage selon l'une des revendications 11 - 13, caractérisé par l'utilisation d'au moins un capteur (13) transmettant au dispositif de commande un signal précisant si le seuil de projection (24) est atteint et/ou dépassé et enregistrant la puissance à l'électrode ainsi que ses variations (26, 26a, 29, 29a, 30, 30a) pendant le soudage.

15. Dispositif de soudage selon l'une des revendications 11-14, caractérisé en ce que le dispositif de commande (16), sur la base d'une courbe typique pour une projection, détermine si une projection est provoquée lors du soudage et/ou si le seuil de projection (24) est atteint voire dépassé.

16. Dispositif de soudage selon l'une ou l'autre des revendications précédentes, caractérisé en ce que le dispositif de commande, à partir d'une courbe (26, 26a) de puissance à l'électrode typique pour un bon point de soudage, précise si le point de soudage est bon ou non.

17. Dispositif de soudage selon l'une ou l'autre des revendications précédentes, caractérisé en ce que le dispositif de commande précise si le seuil de collage (25) est atteint et/ou dépassé, en fonction de la courbe de puissance à l'électrode.

18. Dispositif de soudage selon l'une ou l'autre des revendications précédentes, caractérisé en ce que le dispositif de commande (16) compare les variations de la puissance à l'électrode communiquées par le capteur (13) avec des courbes ou faisceaux de courbes prédéfinis ou mémorisés, typiques pour un bon point de soudage et/ou une projection et/ou un collage.

19. Dispositif de soudage selon l'une ou l'autre des revendications précédentes, caractérisé en ce qu'un grand nombre de points de soudage distancés l'un par rapport à l'autre sur toute la surface d'un même métal à souder est prévu pour chaque phase de travail.

20. Dispositif de soudage selon une des revendications précédentes, caractérisé en ce que dans chaque phase de contrôle, l'ampérage est augmenté graduellement de 0,2 kA.
